# EUROPEAN PATENT APPLICATION

(11) **EP 1 571 684 A1**
(43) Date of publication of application: **07.09.2005**
(21) Application number: 05004439.5
(22) Date of filing: 01.03.2005
(51) Int. Cl.: H01H 33/66

(54) **Solid-state insulated switchgear, resin molding and method of manufacturing the resin molding thereof**

(30) Priority: 01.03.2004 JP 2004056162; 23.03.2004 JP 2004084499
(71) Applicant: KABUSHIKI KAISHA TOSHIBA, Tokyo (JP)
(72) Inventor: Shioiri, Tetsu, 1-1 Shibaura 1-chome Minato-ku Tokyo (JP); Makishima, Satoshi, 1-1 Shibaura 1-chome Minato-ku Tokyo (JP); Kinoshita, Susumu, 1-1 Shibaura 1-chome Minato-ku Tokyo (JP); Shimizu, Toshio, 1-1 Shibaura 1-chome Minato-ku Tokyo (JP); Sato, Junichi, 1-1 Shibaura 1-chome Minato-ku Tokyo (JP); Saito, Toshihisa, 1-1 Shibaura 1-chome Minato-ku Tokyo (JP); Sakaguchi, Osamu, 1-1 Shibaura 1-chome Minato-ku Tokyo (JP); Miyagawa, Masaru, 1-1 Shibaura 1-chome Minato-ku Tokyo (JP)
(74) Representative: HOFFMANN EITLE

(57) **Abstract**

A solid-state insulated switchgear employed in a power source system, assembled with an electrical device (14) molded with insulating material formed of multiple insulating layers (17) and (18), is formed with multiple insulating layers (17) and (18) around said electrical device (14) with a main circuit conductor terminal exposed and such that the dielectric constant becomes smaller towards the peripheral direction, such that the electrical field intensities of the respective interface surfaces of the electrode terminals of the electrical device and the multiple insulating layers (17) and (18) are equal.

## Description

### BACKGROUND OF THE INVENTION

### 1. Field of the Invention

The present invention relates to a solid-state insulated switchgear for electrical devices such as vacuum valves or connecting conductors used in power source systems, molded of insulating material such as epoxy resin, and furthermore relates to a resin molding whereby the electrical characteristics of a main circuit member such as a vacuum valve or connecting conductor used in this switch are improved by molding with insulating material such as epoxy resin and a method of manufacture thereof.

### 2. Description of the Related Art

Conventionally, for electrical devices such as vacuum valves or connecting conductors used to constitute the main circuits of switchgears, it was known to employ solid-state insulated electrical devices in which, in order to prevent lowering of the performance of the insulation due to the effect of contamination or moisture, these electrical devices were formed with an insulating skin molded of insulating material such as epoxy resin and an earthing layer was provided as an outer covering of this insulating skin. An example is Laid-open Japanese patent application No. (Tokkai 2001-286018).

With such molded electrical devices, when high voltage of 6 kV or more was employed as the rated voltage of the switchgear, the high field intensity required the insulating thickness to be comparatively large and, in addition, fillers of various types were mixed with the epoxy resin in order to achieve excellent electrical properties and mechanical properties, so the device became heavy, with a specific gravity of about 2.

In order to solve this problem, it is known to form multiple insulating layers of different dielectric constant so as to make it possible to decrease the insulation thickness, by controlling the electrical field distribution in the insulating layer. An example of such a construction is disclosed in Laid-open Japanese Patent Application No. (Tokkai H. 11-262120).

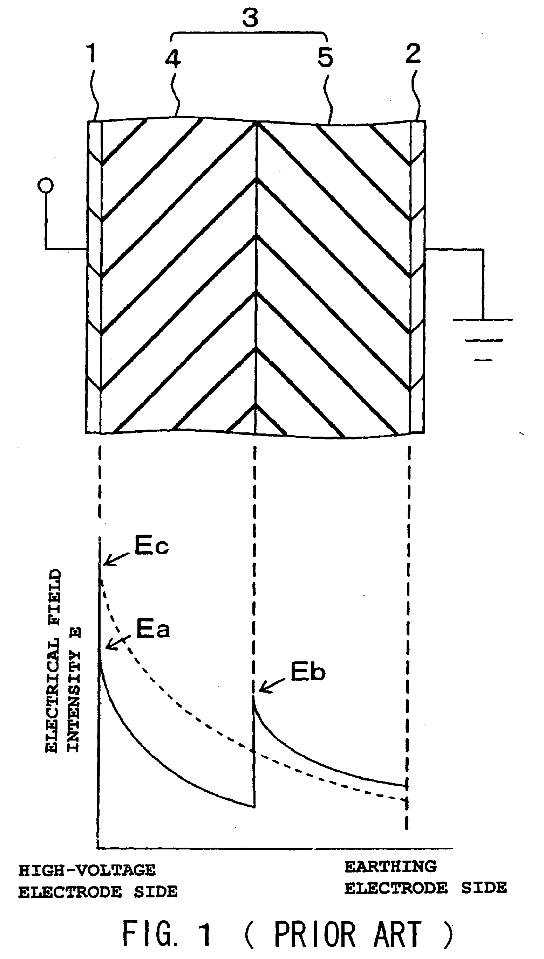

In this construction, as shown in Figure 1, the insulating layer 3 between the high-voltage electrode 1 and earth electrode 2 is divided into a high-voltage side insulating layer 4 and an earth side insulating layer 5, the dielectric constant of the earth side insulating layer 5 being made smaller than that of the high-voltage side insulating layer 4.

If this is done, the maximum electrical field intensity of the high-voltage side insulating layer 4 is Ea and the maximum electrical field intensity of the earth side insulating layer 5 is Eb and the electrical field intensity can thus be suppressed compared with the maximum electrical field intensity Ec in the case where a dielectric layer 3 is provided which is of a single dielectric constant. That is, the relationship that the respective maximum electrical field intensity Ea and maximum electrical field intensity Eb when different dielectric constants are provided < the maximum electrical field intensity Ec when a single dielectric constant is provided is obtained.

Also, the respective insulation thicknesses of the high-voltage side insulating layer 4 and earth side insulating layer 5 can be reduced in the ratio that the maximum electrical field intensity is suppressed.

Also, in cases where such two different layers, namely, insulating layer 4 and 5, are provided, conventionally, two-stage molding is employed in which one of the insulating layers 4 (5) is molded, then the surface thereof is subjected to sandblasting treatment in order to increase its adhesivity and the other insulating layer 5 (4) is molded thereon. An example of this is disclosed in Laid-open Japanese Patent Application No. (Tokkai H. 7-214576).

However, sandblasting treatment is a treatment in which sand or the like is blasted onto the surface of the insulating layer 4 (5) at high pressure and it is a difficult task to achieve roughening of the entire surface. If this sandblasting treatment is not performed in a uniform fashion, adhesion is lowered at the surfaces where the insulating layers 4 and 5 are stuck onto each other i.e. exfoliation occurs at the interface. As a result, the problem arises that the maximum electrical field intensity at the interface becomes Ed, which is higher than the maximum electrical field intensities Ea, Eb when two-stage molding is performed of insulating materials that are of different dielectric constants and the maximum electrical field intensity Ec when molding is performed of an insulating material of a single dielectric constant.

There are the following problems with a conventional solid-state insulated switchgear as described above.

Notwithstanding the fact that the maximum electrical field intensity can be suppressed by using a high-voltage side insulating layer 4 and an earth side insulating layer 5 of different dielectric constants, differences arise in the respective maximum electrical field intensities, with the result that it was not possible to achieve very large reductions in thickness of the insulation. Specifically, these maximum electrical field intensities change depending on the magnitude of the dielectric constants and the thickness of the insulation and the insulation thickness is determined by the highest one of these maximum electrical field intensities.

It was therefore desired to make the respective maximum electrical field intensities of the high-voltage side insulating layer 4 and earth side insulating layer 5 equal, so as to make the thickness of insulation at the respective insulating layers 4 and 5 small. In this way, the weight of a molded solid-state insulated switchgear constituted by assembly with an electrical device can be suppressed.

### SUMMARY OF THE INVENTION

Accordingly, one object of the present invention is to provide a novel solid-state insulated switchgear molded with multiple insulating layers of different dielectric constants assembled with an electrical device wherein weight reduction can be achieved.

A further object of the present invention is to provide a method of manufacturing a resin molding whereby electrical field intensity can be suppressed by improving the adhesivity of the interfaces of multiple insulating layers of different dielectric constant.

In order to achieve the above objects, a solid-state insulated switchgear according to the present invention is constructed as follows.

Specifically, according to the present invention there is provided a solid-state insulated switchgear employed in a power source system, assembled with an electrical device molded with insulating material formed of multiple insulating layers, wherein the electrical field intensities at the electrode terminals of the electrical device and respective interfaces of the multiple insulating layers are made equal by forming multiple insulating layers, around said electrical device with a main circuit conductor terminal exposed and such that the dielectric constant becomes smaller towards the peripheral direction.

In such a construction, multiple insulating layers are employed wherein the dielectric constant becomes progressively smaller towards the peripheral direction and the insulating layer on the electrical device side is made the insulating layer of greatest dielectric constant, and the electrical field intensities at the electrode terminals of the electrical device and respective interfaces of the multiple insulating layers are arranged to be equal, so the insulation thicknesses of the respective insulating layers can be made small and, concomitantly, the weight of such a solid-state insulated switchgear employed in a power source system assembled with an electrical device can be reduced.

Furthermore, in order to achieve the above objects, a method of manufacturing a resin molding according to the present invention is as follows.

Specifically, the method comprises an immersion step of immersing a main circuit member of a switchgear in a first epoxy resin and forming an insulating layer around this main circuit member and a metal mold pouring step wherein, after said main circuit member that was formed with the insulating layer has been set in position in the metal mold, a second epoxy resin in liquid form that is of dielectric constant smaller than that of the first epoxy resin is poured into this metal mold and hardened to form two insulating layers; wherein the insulating layer immediately after setting in position in the metal mold is in a gel condition.

With such an arrangement, in which, first of all, a main circuit member is immersed in the first epoxy resin in liquid form and an insulating layer is formed in a gel condition, and the main circuit member is then set in position in the metal mold with this gel condition being maintained, and a second epoxy resin in liquid form of dielectric constant smaller than the first epoxy resin is poured in and hardened, a method of manufacturing a resin molding can be obtained whereby secure adhesion at the interface of the two insulating layers of different dielectric constant is obtained and whereby electrical properties can be improved.

### BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings, wherein:
Figure 1 is a diagram given in explanation of the electrical field intensity of an insulating layer of multiple layers of different dielectric constant;
Figure 2 is a side view showing a partial cross-section of the construction of a solid-state insulating switchgear according to a first embodiment of the present invention;
Figure 3 is a cross-sectional view showing a breaker according to a first embodiment of the present invention;
Figure 4 is a characteristic plot showing the relationship between electrical field intensity and dielectric constant according to a first embodiment of the present invention;
Figure 5 is a characteristic plot showing the relationship between electrical field intensity and insulation thickness according to a first embodiment of the present invention;
Figure 6 is a cross-sectional view showing a device for molding a first insulating layer according to a second embodiment of the present invention;
Figure 7 is a characteristic plot given in explanation of the relationship between the complex viscosity of the epoxy resin according to a second embodiment of the present invention and time;
Figure 8 is a cross-sectional view showing a metal mold molding a second insulating layer according to a second embodiment of the present invention;
Figure 9 is a cross-sectional view showing a device for molding a second insulating layer according to a second embodiment of the present invention;
Figure 10 is a cross-sectional view showing the formation of an earthing layer according to a second embodiment of the present invention;
Figure 11 is a cross-sectional view showing shields (shells) forming a first insulating layer according to a third embodiment of the present invention; and
Figure 12 is a cross-sectional view showing a vacuum valve fitted with shields (shells) according to a third embodiment of the present invention.

### DETAILED DESCRIPTION OF THE PREFERRED EMBODIMENTS

### [First embodiment]

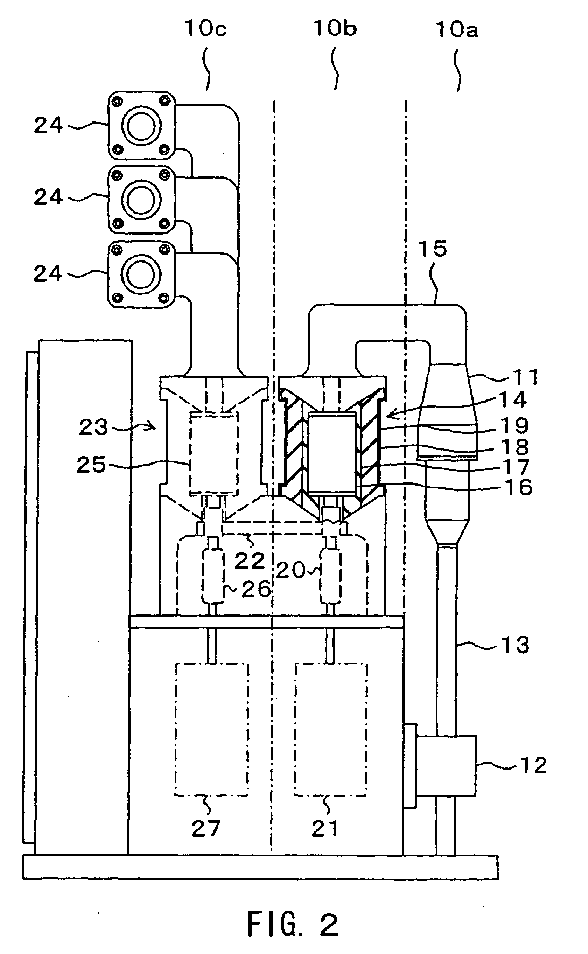

Referring now to the drawings, wherein like reference numerals designate identical or corresponding parts throughout the several views, and more particularly to Figure 2 to Figure 12 thereof, one embodiment of the present invention will be described.

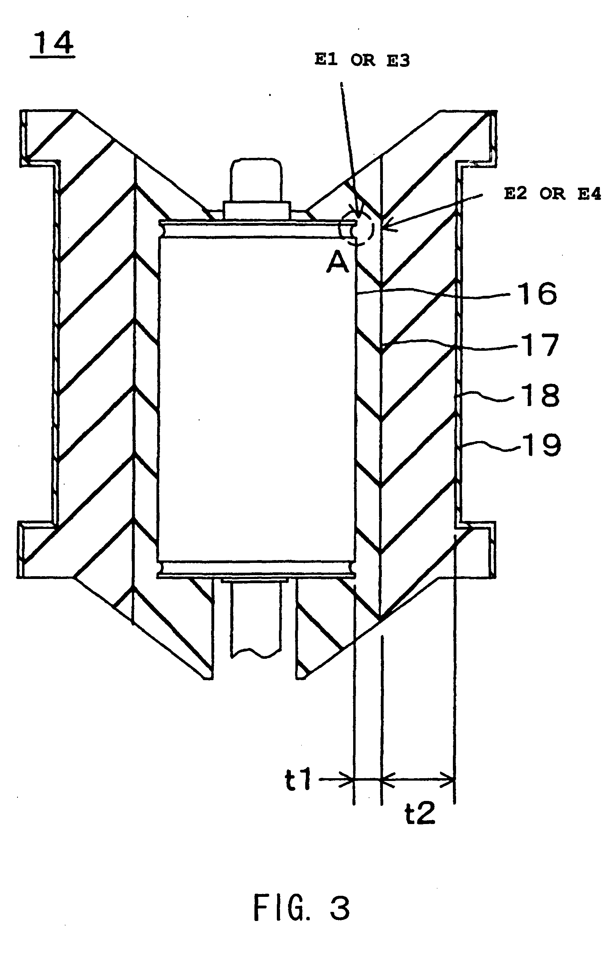

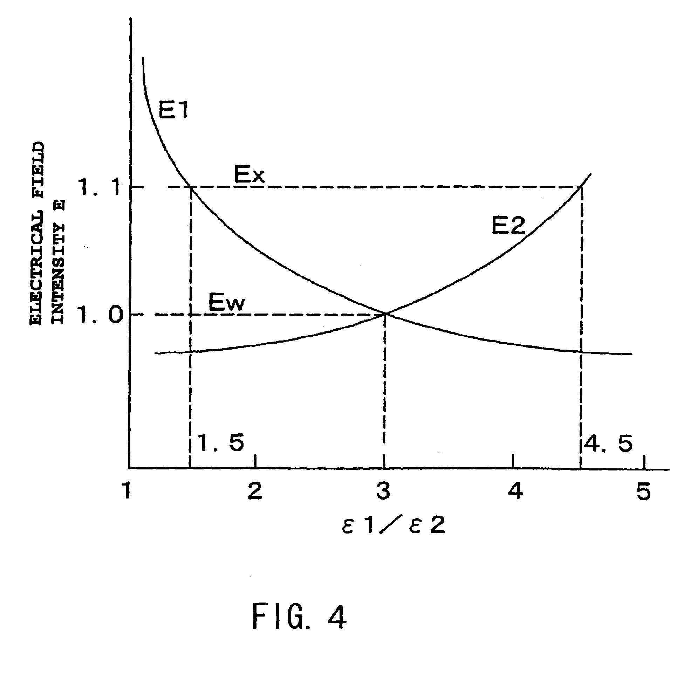

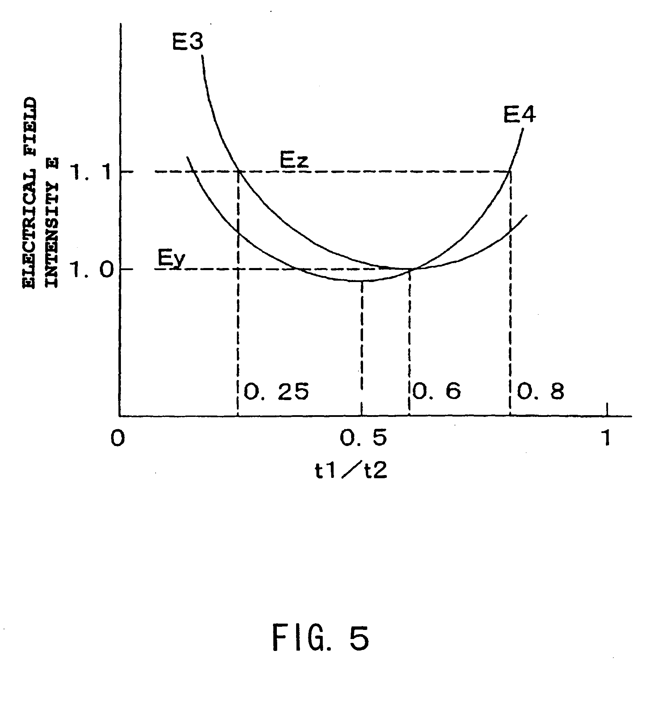

Figure 2 is a side view showing a partial cross-section of the construction of a solid-state insulating switchgear according to an embodiment of the present invention; Figure 3 is a cross-sectional view showing a breaker according to an embodiment of the present invention; Figure 4 is a characteristic plot showing the relationship between electrical field intensity and dielectric constant according to an embodiment of the present invention; and Figure 5 is a characteristic plot showing the relationship between electrical field intensity and insulation thickness according to an embodiment of the present invention.

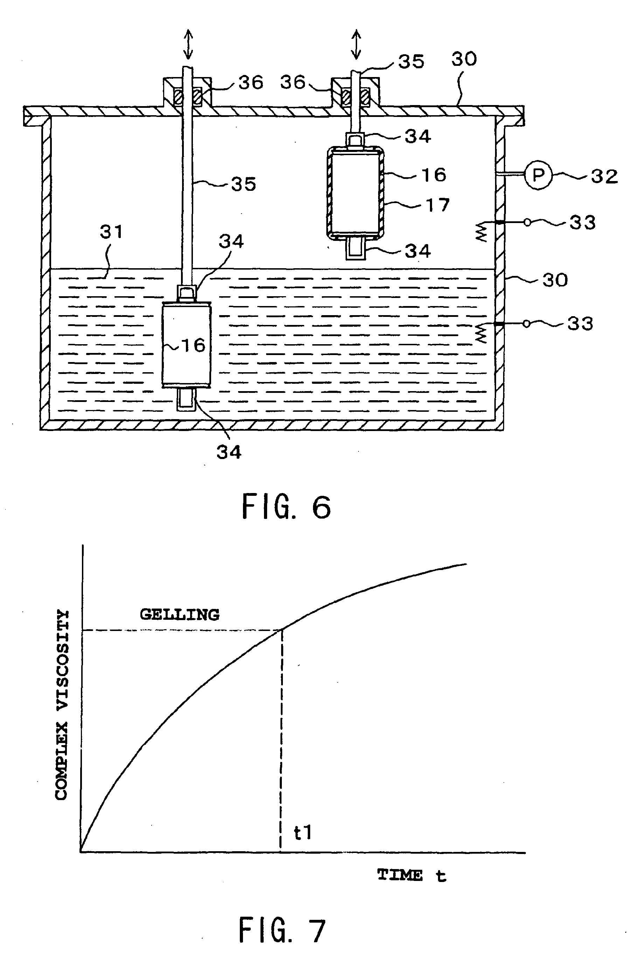

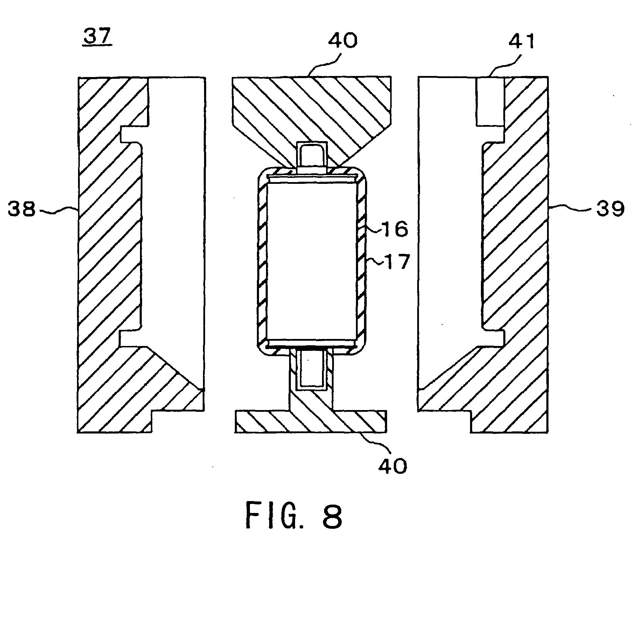

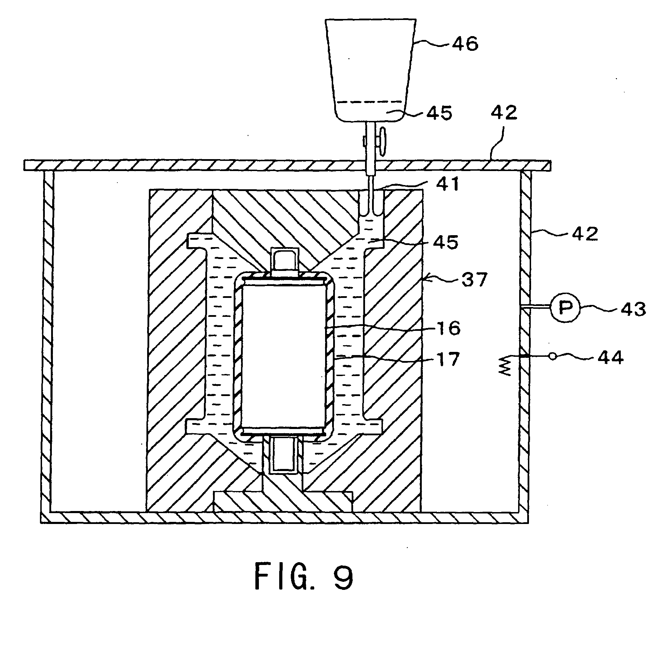

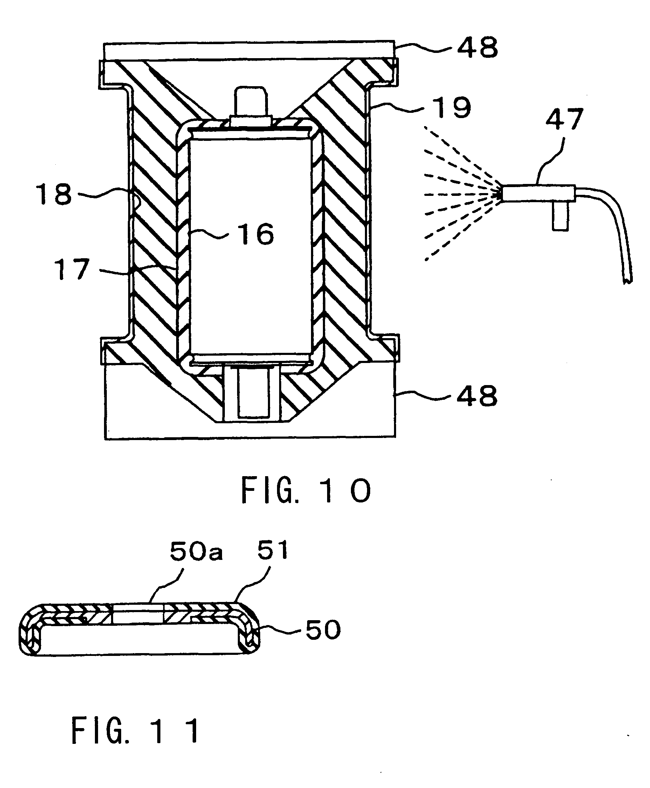

Figure 6 is a side view, partially in section, of the construction of a switchgear according to a second embodiment of the present invention; Figure 7 is a cross-sectional view showing a device for molding a first insulating layer according to a second embodiment of the present invention; Figure 8 is a characteristic plot given in explanation of the relationship between the complex viscosity of the epoxy resin according to a second embodiment of the present invention and time; Figure 9 is a cross-sectional view showing a metal mold for molding a second insulating layer according to a second embodiment of the present invention; Figure 10 is a cross-sectional view showing a device for molding a second insulating layer according to a second embodiment of the present invention; and Figure 11 is a cross-sectional view showing the formation of an earthing layer according to a third embodiment of the present invention.

As shown in Figure 2, in a solid-state insulating switchgear, a power source system is constituted by a rear face side cable section 10a, a central switch section 10b and a front face side bus section 10c.

A cable head 11 is provided in the cable section 10a and a power cable 13 communicating with a transformer 12 is connected with this cable head 11.

A breaker 14 is provided in the switch section 10b and one main circuit terminal of this breaker 14, is connected with the main circuit terminal of the cable head 11 by means of a U-shaped connecting conductor 15. In this breaker 14, there is provided a vacuum valve 16 having a pair of contacts that may freely make contact or be separated. Also, in the vacuum valve 16, the main circuit conductor terminal is exposed and a first insulating layer 17 is provided by molding insulating material such as epoxy resin around this vacuum valve 16 and a second insulating layer 18 is provided around the first insulating layer 17. In addition, an earthing layer 19 is provided around the second insulating layer 18.

At the other main circuit terminal of the breaker (circuit breaker) 14, there is provided an operating mechanism 21 for opening and closing a pair of contacts within the vacuum valve 16 in the axial direction, by means of an insulated operating rod 20. Also, an external electrode of the vacuum valve 16 is in slidable contact with a tie conductor 22 in a direction orthogonal to the axial direction.

A disconnector (circuit disconnector) 23 is provided on the bus section 10c, one main circuit terminal thereof being in slidable contact with the tie conductor 22, while its other main circuit terminal is connected with the bus 24. A vacuum valve 25 is provided in this disconnector 23 in the same way as the breaker 14 and an operating mechanism 27 for opening/closing a pair of contacts in the vacuum valve 25 by means of an insulated operating rod 26 in the axial direction of the vacuum valve is also provided.

It should be noted that the main circuit terminals of the molded main circuit members such as the breaker 14, disconnector 23, connecting conductor 15 and bus 24 are each constituted by interface connecting sections formed in tapered shape, the main circuit sections being mutually connected through flexible conductors, not shown. A control panel 28 is provided at the front face side.

A detailed description of the breaker 14 is given with reference to Figure 3, taking the breaker 14 as an example of such molded electrical devices. As shown in Figure 3, in the construction of the breaker 14, the main circuit conductor terminals are exposed at both terminals of the vacuum valve 16, a first insulating layer 17 is provided by molding insulating material such as epoxy resin, then, after improving the adhesivity by for example sandblasting treatment of the surface of the first insulating layer 17, a second insulating layer 18 is provided thereon by molding an insulating layer of for example epoxy resin. As a covering of the second insulating layer 18, an earthing layer 19 constituted by spray-coating of a conductive coating such as for example carbon coating is provided.

Regarding the relationship of the dielectric constants of the first insulating layer 17 and a second insulating layer 18, the dielectric constant of the second insulating layer 18 is made smaller than that of the first insulating layer 17. As shown in Figure 4, taking the electrical field intensity characteristic at the terminal of the vacuum valve 16 as being E1, the electrical field intensity characteristic at the interface surface of the first insulating layer 17 and second insulating layer 18 as being E2, the dielectric constant of the first insulating layer 17 as ε1 and the dielectric constant of the second insulating layer 18 as ε2, thus if the ratio of the dielectric constants is ε1/ε2=3, the electrical field intensity characteristics E1 and E2 mutually intersect.

Specifically, by making the dielectric constant ε1 of the first insulating layer 17 three times the dielectric constant ε2 of the second insulating layer 18, their electrical field intensities have the same value and are respectively a minimum. If the insulation thickness of the first insulating layer 17 is t1 and the insulation thickness of the second insulating layer 18 is t2, this occurs when the ratio thereof t1/t2=0.5. The same trend of mutually intersecting electrical field intensity characteristics E1 and E2 is found for a range t1/t2=0.25 to 0.8 of this insulation thickness ratio.

The dielectric constant can be adjusted by altering the content of for example silica powder dispersed in the epoxy resin.

Next, regarding the relationship of the insulation thicknesses of the first insulating layer 17 and second insulating layer 18, the insulation thickness t2 of the second insulating layer 18 is made greater than the insulation thickness t1 of the first insulating layer 17. This is because, as shown in Figure 5, if the electrical field intensity characteristic at the terminal of the vacuum valve 16 is taken as E3 and the electrical field intensity characteristic at the interface surface of the first insulating layer 17 and second insulating layer 18 is taken as E4, both of these respective electrical field intensity characteristics E3 and E4 are V-shaped curves and when the ratio of the insulation thicknesses t1/t2=0.5 to 0.6 the electrical field intensity characteristics E3 and E4 are lowest.

Specifically, the electrical field intensity can be suppressed to the greatest extent by making the insulation thickness t2 of the second insulating layer 18 twice that of the insulation thickness t1 of the first insulating layer 17. This is when the ratio of the dielectric constant ε1 of the first insulating layer 17 and the dielectric constant ε2 of the second insulating layer 18 i.e. ε1/ε2=3. The same V-shaped curve trend of the electrical field intensity characteristics E3 and E4 is found for a range ε1/ε2=1.5 to . 4.5 of this dielectric constant ratio.

On the other hand, as shown in Figure 3, the maximum electrical field intensity of the breaker 14 occurs as the location A of the vacuum valve 16 i.e. at the electrode terminal. This is because this location is that of vacuum sealing of the interior of the vacuum valve 16 and constitutes a sharp edge due to welding, for example. The breakdown voltage characteristic possessed by such a sharp edge means that insulation breakdown cannot occur immediately, even if the first insulating layer 17 reaches the critical level for breakdown due to the local electrical field intensity at this location. For insulation breakdown to occur, it is necessary that further rise in the electrical field intensity should take place so that the field intensity reaches the critical value under the condition that a high electrical field causing polarization is produced in the interior of the first polarizing layer 17.

The electrical field intensity at which such insulation breakdown is reached is 1.1 times the electrical field intensity prior to occurrence of polarization, in the case of a breaker 14 having a sharp edge. That is, as shown in Figure 4, rise of the electrical field intensity Ex to 1.1 times the minimum electrical field intensity Ew where the electrical field intensity characteristics E1 and E2 mutually intersect with the same value contributes to actual insulation breakdown. In this way, it becomes practical to employ electrical field intensity Ex such as would contribute to actual insulation breakdown; finding the ratio of dielectric constants producing electrical field intensities less than this electrical field intensity Ex, a range of ratios of ε1/ε2=1.5 to 4.5 is obtained. If the ratio of the dielectric constants is less than ε1/ε2=1.5, or greater than ε1/ε2=4.5, the electrical field intensity Ex is exceeded, so insulation breakdown results.

Also, in the same way as described above, as shown in Figure 5, raising the electrical field intensity Ez to 1.1 times the minimum electrical field intensity Ey of the V-shaped curve of the electrical field intensity characteristics E3 and E4 contributes to actual insulation breakdown. In this way, it becomes practical to employ electrical field intensity Ez such as would contribute to actual insulation breakdown; finding the ratio of insulation thicknesses producing electrical field intensities less than this electrical field intensity Ez, a range of ratios of t1/t2=0.25 to 0.8 is obtained. If the ratio of the insulation thicknesses is less than t1/t2=0.25 or greater than t1/t2=0.8 the electrical field intensity Ez is exceeded, so insulation breakdown results.

It should be noted that if insulation breakdown of the first insulating layer 17 occurs due to the electrical field intensity Ex or electrical field intensity Ez being exceeded, the insulating layer 18 also undergoes insulation breakdown in avalanche fashion until finally entire circuit insulation breakdown of the first insulating layer 17 and second insulating layer 18 is reached.

With a solid-state insulating switchgear according to the above embodiment, owing to the fact that a first insulating layer 17 of large dielectric constant is provided on the side of the vacuum valve 16 and a second insulating layer 18 of dielectric constant smaller than that of the first insulating layer 17 is provided around this first insulating layer 17, the covering thereof constituting an earthing layer 19 and the electrical field intensities of the electrode terminal of the vacuum valve 16 and of the interface surface of the first insulating layer 17 and second insulating layer 18 being arranged to be practically the same value, the respective insulation thicknesses of the insulating layer 17 and 18 can mutually be made small. Also, the weight of the solid-state insulated switchgear that is constituted by assembly with this electrical device can be reduced.

Also, although the molded electrical device was described in terms of the breaker 14, this could also be applied to the disconnector 23 or connecting conductor 15 or other device.

Furthermore, although the description described the provision of an earthing layer 19 at the periphery of the second insulating layer 18, an earthing layer 18 may be dispensed with by independently fixing each phase with an intervening air gap sufficient to withstand the prescribed rated voltage. In this case, the air gap itself constitutes an insulating medium, so it can be arranged that the electrical field intensity of the electrode terminal of the electrical device, the interface surfaces of the first and second insulating layer 17 and 18 and the interface surfaces with the second insulating layer 18 and insulating medium i.e. of the surface along the second insulating layer 18 is the same.

### [Second embodiment]

Further, a resin molding and a method of manufacture thereof constituting second and third embodiments according to the present invention are described with reference to Figure 6.

First of all, a first vacuum tank 30 is prepared for providing the first insulating layer 17 at the periphery of the vacuum valve 16. The interior of the first vacuum tank 30 is filled with first epoxy resin 31 and at the side walls thereof there is provided a vacuum pump 32 that evacuates the interior of the first vacuum tank 30 and a heater 33 that performs heating of the interior of the first vacuum tanker 30. Also, masking members 34 are mounted on the vacuum valve 16 so as to prevent the first epoxy resin 31 from sticking to both terminals of the main circuit conductor. Also, a moveable rod 35 capable of freely moving the vacuum valve 16 while maintaining the degree of vacuum within the first vacuum tank 30 is provided, with an O ring 36 interposed.

Next, as shown in Figure 8, a metal mold 37 for providing the second insulating layer 18 is prepared. This metal mold 37 is divided into two, namely, one metal mold 38 and another metal mold 39 and comprises an insert (nest) 40 forming an interface connecting section. An inlet 41 is formed when the one metal mold 37 and at the other metal mold 38 and the insert 40 are assembled.

Also, as shown in Figure 9, a second vacuum tank 42 is prepared that accommodates the assembled metal mold 37. In this second vacuum tank 42, there are provided a vacuum pump 43 for evacuating the interior thereof and a heater 44 for heating the interior thereof. Also, a resin tank 46 for pouring second epoxy resin 45 into the metal mold 37 is provided outside the second vacuum tank 42 above the inlet 41.

Next, as shown in Figure 10, a spray 47 and masking member 48 are prepared for spraying an electrically conductive coating such as for example carbon coating for providing an earthing layer 19.

Then, when an insulating layer is provided around the vacuum valve 16, as shown in Figure 6, masking members 34 are mounted at both terminals of the main circuit conductor of the vacuum valve 16 and fixed to the moveable rod 35. Also, first epoxy resin 31 is introduced into the first vacuum tank 30 up to practically the intermediate level in the height direction of this tank 30.

This first epoxy resin is a bisphenol epoxy resin in liquid form into which have been introduced a few volume% of at least one constituent, namely, silica, fused silica or core shell rubber in the form of fine particles of particle size no more than 1 µm in order to increase thixotropy. In addition, 65 to 75 volume% of a molten filler comprising a metallic oxide such as titanium oxide or barium titanate and silica are added. In this way, a dielectric constant ε1 of ε1=7 to 8 is obtained. It should be noted that, although the dielectric constant ε1 can be increased by further increase of the content of filler obtained by melting metallic oxide and silica, mechanical strength is impaired. Contrariwise, it is undesirable to decrease the content of this filler, since this would prevent a large dielectric constant ε1 from being achieved.

Also, in order to lengthen the pot life of the first epoxy resin 31 it is kept warm at a low temperature of for example 60° by means of a heater 33. Furthermore, the interior of the first vacuum tank 30 is maintained at a vacuum of for example 0.5 kPa by means of a vacuum pump 32.

In this condition, the vacuum valve 16, whose surface has been degreased by for example heating to a high temperature of 160°C, is immersed in the first epoxy resin 31 by moving the moveable rod 35 by means of a drive device, not shown. When the vacuum valve 16 is pulled up to the liquid surface of the first epoxy resin 31 after immersion for a few minutes, by moving the moveable rod 35, a first insulating layer 17 having an insulation thickness of a few mm is formed around the vacuum valve 16. Although, as shown in Figure 7, the first insulating layer 17 is in liquid form immediately after immersion, with lapse of time t, its complex viscosity rises and it starts to harden. Thus a gel condition is produced by changing from a liquid form to solid after the lapse of a prescribed time t1, for example three minutes, whereupon the vacuum of the first vacuum tanker 30 is released and the vacuum valve 16 formed with the first insulating layer 17 is withdrawn. The insulation thickness of the first insulating layer 17 can be adjusted to the prescribed insulation thickness by repeated immersion.

Thus the step of immersing the vacuum valve 16 in the first epoxy resin 31 to form the first insulating layer 17 constitutes the immersion step.

Next, as shown in Figure 8, the masking members 34 are immediately removed and the vacuum valve 16 is fixed on the insert 40 and the one metal mold 38 and the other metal mold 39 are assembled and firmly clamped. The metal mold 37 which is thus assembled is arranged in the second vacuum tank 42 as shown in Figure 9. The interior of the second vacuum tank 42 is then evacuated to for example 0.5 kPa by means of a vacuum pump 43 and heated to for example 120°C by means of an heater 44. After heating, the valve of a resin tanker 46 is opened, to allow a liquid second epoxy resin 45 to be poured into the metal mold 37 from the inlet 41.

The second epoxy resin 45 comprises liquid bisphenol epoxy resin into which has been introduced 65 to 75 volume% of ordinary silica. In this way, a dielectric constant ε2 of the second epoxy resin 45 of ε2=3 to 4 is obtained. This is about 1/2 of the dielectric constant ε1=7 to 8 of the first epoxy resin 31 and is desirable in achieving electrical field moderation at the two insulating layers of different dielectric constants.

When pouring has been completed, the vacuum of the second vacuum tanker 42 is released and the metal mold and 37 is introduced into a drying furnace, not shown, where hardening is conducted until toughness is achieved. In this way, the second insulating layer 18 having a prescribed insulation thickness of a dozen mm or so is formed around the first insulating layer 17. In this hardening, the first insulating layer 17 is hardened from a gel condition and the second insulating layer 18 is hardened from a liquid condition through a gel condition, so mutual chemical bonding is achieved at the interface of the insulating layers 17 and 18, with the result that secure adhesion is achieved over the entire interface.

Also, by making the dielectric constant of the first insulating layer 17 about twice that of the second insulating layer 18, the electrical field intensity at the surface of the vacuum valve 16 can be lowered to about 20% compared with the case where a single dielectric constant is employed.

The step of forming the second insulating 18 by placing the vacuum valve 16 formed with the first insulating layer 17 in the metal mold 37 constitutes the metal mold pouring step.

After the hardening, the metal mold 37 is opened and, as shown in Figure 10, cutting processing is performed of the second insulating layer 18 formed as far as the inlet 41 and the interface connection section is covered with a masking member 48. A conductive coating is then blown on by means of a spray 47, to form an earthing layer 19. A resin molding constituted by first and second insulating layers 17 and 18 molded in two steps, around the vacuum valve 16 is thereby obtained by drying the earthing layer 19 and removing the masking member 48.

With the method of manufacturing a resin molding according to the second embodiment described above, since, first of all, the vacuum valve 16 is immersed in the first epoxy resin 31 and the first insulating layer 17 is formed in a gel condition, then, maintaining this condition, the valve is set in position inside the metal mold 37 and the second epoxy resin 45 of dielectric constant smaller than that of the first epoxy resin is poured in to form the second insulating layer 18, the insulating layers 17 and 18 are mutually hardened and an earthing layer 19 is then provided, secure adhesivity of the interface of the first insulating layer 17 and second insulating layer 18 is achieved, making it possible to improve the electrical performance.

### [Third embodiment]

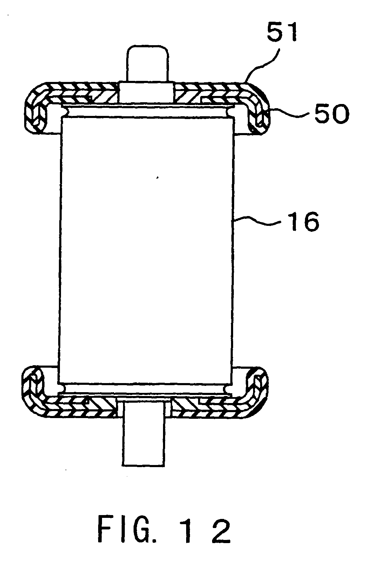

Next, a method of manufacturing a resin molding according to a third embodiment of the present invention will be described with reference to Figure 11 and Figure 12. Figure 11 is a cross-sectional view showing shields forming a first insulating layer according to the third embodiment of the present invention and Figure 12 is a cross-sectional view showing a vacuum valve fitted with shields according to the third embodiment of the present invention. The difference between this third embodiment and the second embodiment lies in the member that forms the first insulating layer. In the third embodiment, constructional portions that are the same as in the case of the second embodiment are given the same reference symbols and further detailed description thereof is dispensed with.

As shown in Figure 11, a third insulating layer 51 is provided on the entire shields 50, made of metal in the form of bowls having a hole in the center thereof, apart from the hole 50a. This third insulating layer 51 is formed by an immersion step as described in the second embodiment with the first epoxy resin 31 in gel condition.

As shown in Figure 12, the shields 50 are respectively mounted at both terminals of the vacuum valve 16 so that the bowl-shaped periphery thereof covers the vacuum valve 16 and are formed with holes such that the inner surface of the holes 50a makes contact with the main circuit conductor terminal of the vacuum valve 16. The purpose of mounting these shields is to suppress the electrical field intensity that arises at the sharp edges that are produced when airtight welding of metal flanges is performed in order to effect vacuum sealing at both terminals of the vacuum valve 16, by covering these sharp edges. Also, second insulating layers 18 are molded by the metal mold pouring step described in the second embodiment. The third insulating layer 51 therefore corresponds to the first insulating layer 17 described in the second embodiment and is of larger dielectric constant than the second insulating layer 18.

It should be noted that the present invention is not restricted to the embodiments described above and could be put into practice modified in various ways within a range that does not depart from the gist of the invention. Although, in the above embodiments, the case was described where two insulating layers of different dielectric constants were employed, it would be possible to employ multiple layers i.e. three or more, making the dielectric constants of the insulating layer on the side of the electrical device the largest and making the dielectric constant of the insulating layer on the earthed side the smallest, thereby achieving practically the same electrical field intensity at the interface surface of the electrode terminals of the electrical device and the insulating layers.

Also, with the method of manufacturing a resin molding according to the third embodiment described above, a large effect in terms of suppressing the electrical field can be achieved by, in addition to the effect of the second embodiment, electrical field moderation of portions where a sharp edge exists, performed by means of the shields 50 and the third insulating layer 51 of large dielectric constant.

In the above embodiment, a resin molding was described using a vacuum valve 16 as the main circuit member, but a connecting conductor or transformer coil or the like could be employed as the main circuit member.

Also, although in the description an earthing layer 19 was provided at the periphery of the second insulating layer 18, if the phases of the switchgear are independently fixed in position with air gaps interposed sufficient to withstand the prescribed rated voltage, the earthing layer 18 could be dispensed with.

## Claims

1. A solid-state insulated switchgear employed in a power source system, assembled with an electrical device molded with insulating material formed of a multiple insulating layer, said solid-state insulated switchgear comprising:
a multiple insulating layer formed around said electrical device with a main circuit conductor terminal exposed and such that a dielectric constant becomes smaller towards a peripheral direction,
**characterized in that** electrical field intensities of a respective interface surface of an electrode terminal of said electrical device and said multiple insulating layer are equal.

2. A solid-state insulated switchgear employed in a power source system, assembled with an electrical device molded with insulating material formed of two insulating layers, said solid-state insulated switchgear comprising:
a first insulating layer formed around said electrical device with a main circuit conductor terminal exposed; and
a second insulating layer formed around said first insulating layer with said main circuit conductor terminal exposed,
**characterized in that** if a dielectric constant of said first insulating layer is ε1 and its insulation thickness is t1 and a dielectric constant of said second insulating layer is ε2 and its insulation thickness is t2, a ratio of said dielectric constants ε1/ε2=1.5 to 4.5 and a ratio of said insulation thicknesses t1/t2 =0.25 to 0.8.

3. The solid-state insulated switchgear according to claim 1,
wherein an earthing layer is provided at a surface of a most peripheral insulating layer of said insulating layers provided on said electrical device.

4. The solid-state insulated switchgear according to claim 2,
wherein an earthing layer is provided at a surface of a most peripheral insulating layer of said insulating layers provided on said electrical device.

5. The solid-state insulated switchgear according to any one of claims 1 to 4,
wherein said electrical device employs at least a vacuum valve that may freely perform connection/disconnection.

6. A method of manufacturing a resin molding, comprising:
immersing a main circuit member of a switchgear in a liquid first epoxy resin and forming an insulating layer around said main circuit member; and
pouring a liquid second epoxy resin of dielectric constant smaller than that of said first epoxy resin into a metal mold after setting said main circuit member formed with said insulating layer in position within said metal mold and hardening to produce a double insulating layer,
**characterized in that** said insulating layer is in a gel condition immediately after setting in position in said metal mold.

7. The method of manufacturing a resin molding according to claim 6,
wherein said first epoxy resin is obtained by introducing into bisphenol epoxy resin a constituent comprising at least one of silica, fused silica, or core shell rubber in a form of fine particles of particle size no more than 1 µm in an amount of a few volume% and also 65 to 75 volume% of filler obtained by melting a metallic oxide and silica, and
said second epoxy resin is obtained by introducing 65 to 75 volume% of silica into bisphenol epoxy resin.

8. The method of manufacturing a resin molding according to claim 6 or claim 7,
wherein said dielectric constant ε1 of said first epoxy resin is ε1=7 to 8 and said dielectric constant ε2 of said second epoxy resin is ε2=3 to 4.

9. A resin molding, comprising:
a first insulating layer formed around a main circuit member of a switchgear with a main circuit conductor exposed; and
a second insulating layer formed around said first insulating layer with said main circuit conductor exposed,
wherein respective hardening is performed from a gel condition of said first insulating layer and a liquid condition of said second insulating layer and a dielectric constant of said second insulating layer is smaller than that of said first insulating layer.

10. A resin molding comprising:
a shield formed so as to cover a sharp edge of a main circuit member of a switchgear and a third insulating layer formed around said shield; and
a second insulating layer formed around said main circuit member that is formed around said shield, with said main circuit conductor terminal exposed,
wherein respective hardening is performed from a gel condition of said third insulating layer and a liquid condition of said second insulating layer and a dielectric constant of said second insulating layer is smaller than that of said third insulating layer.

11. The resin molding according to claim 9 or claim 10,
wherein an earthed layer is provided covering said second insulating layer.
